# EUROPÄISCHE PATENTSCHRIFT

(11) **EP 2 762 732 B1**
(45) Veröffentlichungstag und Bekanntmachung des Hinweises auf die Patenterteilung: **27.07.2016**
(21) Anmeldenummer: 14152571.7
(22) Anmeldetag: 25.01.2014
(51) Int. Cl.: F16B 5/02, F16B 37/04

(54) **Haltenocken**
Retaining cam
Ergots de retenue

(30) Priorität: 04.02.2013 DE 202013001061 U
(43) Veröffentlichungstag der Anmeldung: 06.08.2014
(73) Patentinhaber: Fairchild Fasteners Europe - Camloc GmbH, 65761 Kelkheim (Taunus) (DE)
(72) Erfinder: Blancke, Stefan, 65779 Kelkheim (DE); Jüling, Dieter, 65779 Kelkheim (DE)
(74) Vertreter: Keil & Schaafhausen Patent- und Rechtsanwälte PartGmbB

(56) Entgegenhaltungen:
- WO-A1-2008/157265
- DE-A1- 1 400 774
- DE-T2- 60 307 124
- DE-U1-202011 106 725

## Beschreibung

Die Erfindung betrifft einen Haltenocken, der für einen Schnellverschluss zum Verbinden von beispielsweise plattenförmigen Bauteilen geeignet ist. Ein solcher Haltenocken weist einen Käfig auf, der starr mit einem der Bauteile verbindbar ist, und ein an dem Käfig gelagertes Gehäuse, in dem eine Haltenockenschraube drehfest vorgesehen ist. Auf diese ist ein mit einem anderen Bauteil verbindbarer Verschlussbolzen mit einem Innengewinde aufschraubbar.

Schnellverschlüsse, die vom grundsätzlichen Aufbau her aus der DE 103 19 930 B4 bekannt sind, werden in der Luft- und Raumfahrt eingesetzt, um Bauteile aus Komposit-Materialien oder Aluminiumbauteile rasch und verliersicher miteinander zu verbinden. Hierzu kann es auch erforderlich sein, einen axialen Versatz der Öffnungen der Bauteile mit dem Haltenocken ausgleichen zu können. Dieses sogenannte "Floating" wird erreicht, indem der üblicherweise aus einem metallischen Werkstoff bestehende Käfig das Gehäuse des Haltenockens so aufnimmt, dass sich das Gehäuse relativ zu dem Käfig geringfügig bewegen kann. Der Käfig hat dabei die Aufgabe, das Gehäuse des Haltenockens so an dem Bauteil zu befestigen, dass dieses verliersicher gehalten wird. Wenn die Verbindung zwischen den typischerweise plattenförmigen Bauteilen hergestellt ist, wird das Gehäuse mit der darin aufgenommenen Haltenockenschraube über die Verbindung mit dem Verschlussbolzen fest mit den beiden Bauteilen verspannt.

Die bekannten Käfige sind einteilig oder mehrteilig ausgeführt und werden je nach Einsatzfall mit einer entsprechenden Fügetechnik mit dem Gehäuse des Haltenockens verbunden. Aufgrund der verwendeten metallischen Werkstoffe kann der Fügeaufwand relativ hoch sein. Zudem kann es je nach Einsatzort zu Korrosion und/oder Kontaktkorrosion kommen. Dies ist unerwünscht.

Die DE 20 2011 106 725 U1 beschreibt einen Haltenocken für ein Schnellverschluss zum Verbinden von plattenförmigen Bauteilen. Das Gehäuse ist relativ zu dem Käfig quer verschiebbar und weist eine Haltenockenschraube auf. Der Haltenocken umfasst ferner einen Käfig, der mittels einer Nietverbindung mit einem Bauteil fest verbunden werden kann. Der Käfig weist von einer Grundplatte abragende Laschen mit Öffnungen auf, und das Gehäuse ist mit Befestigungsvorsprüngen ausgestattet, die in die Öffnungen des Käfigs eingreifen, um das Gehäuse an dem Käfig zu befestigen. Zentral besitzt der Käfig eine Öffnung, durch die der Verschlussbolzen hindurchgeführt wird. Das Gehäuse wird von der den Bauteilen abgewandten Seite in den Käfig eingesetzt.

Die WO 2008/157265 A1 beschreibt eine Befestigungsanordnung zum Verbinden von plattenförmigen Bauteilen. In einem Gehäuseabschnitt ist ein Innengewindeabschnitt ausgebildet. Der Gehäuseabschnitt ist seitlich in einen Käfig einsetzbar.

Die in der DE 1 400 774 beschriebene Schraubverbindung umfasst einen Träger, in dem ein Bolzen mit einem Gewindeteil vorgesehen ist. Der Träger wird durch einen Trägerkäfig in seiner Lage gehalten. Ein separater Klemm- oder Einspannring ist oberhalb des Trägers angeordnet. Der obere Teil des Trägers ist mit mehreren Schlitzen versehen, die eine Anzahl federnder Laschen bilden. Am oberen Ende des Trägers ist eine geneigte Fläche ausgebildet, die für das Zusammenwirken mit einer geneigten Fläche am Klemmring bestimmt ist. Die Anordnung ist derart, dass wenn die Verbindung festgezogen wird, die federnden Laschen nach innen gedrückt werden, um die Verbindung an ihrem festgezogenen Zustand zu halten.

Aufgabe der vorliegenden Erfindung ist es, einen Haltenocken bereitzustellen, der einfacher montierbar ist und weniger anfällig gegen Korrosion ist. Eine weitere Aufgabe der vorliegenden Erfindung liegt darin, den typischerweise im Bereich der Luft- und Raumfahrt eingesetzten Haltenocken hinsichtlich des Gewichts weiter zu verbessern.

Diese Aufgabe wird erfindungsgemäß mit einem Haltenocken mit den Merkmalen des Anspruchs 1 gelöst. Der Erfindung liegt dabei der Gedanke zugrunde, dass das Gehäuse des Haltenockens (wie bisher auch) aus Metall besteht, während der Käfig aus Kunststoff besteht. Dies ist für einen vereinfachten Fügeprozess vorteilhaft und wirkt gleichzeitig der Korrosion bzw. der Kontaktkorrosion entgegen. Durch die Kunststoffausführung des Käfigs gegenüber den bisher bekannten Käfigen aus Metall kann zusätzlich Gewicht eingespart werden.

Vorzugsweise ist der Käfig so ausgelegt, dass das Gehäuse des Haltenockens nach dem Fügen unverlierbar mit dem Käfig verbunden ist. Zudem sollte der Käfig so ausgelegt sein, dass im montierten Zustand die Kraft, die in axialer Richtung von der Haltenockenschraube und dem Verschlussbolzen aufgebracht wird, ohne Unterbrechung von den Bauteilen über den Käfig zur Auflagefläche des Gehäuses des Haltenockens fließen kann.

Erfindungsgemäß ist das Gehäuse des Haltenockens relativ zu dem Käfig in einer zu der Ebene der Auflagefläche der Bauteile parallelen Richtung verschiebbar. Dies ermöglicht das sogenannte Floating, d.h. eine nachträgliche Veränderung der Position des Gehäuses und damit der Haltenockenschraube relativ zu dem Bauteil, an welchem der Haltenocken befestigt ist. Auf diese Weise ist es möglich, dass bei der Verbindung der Haltenockenschraube mit dem Verschlussbolzen geringe Toleranzen bzw. ein Versatz ausgeglichen werden können.

Der Käfig weist eine zentrale Öffnung auf, durch welche die Haltenockenschraube und/oder der Verschlussbolzen durchtreten können. Zusätzlich können Öffnungen zur Aufnahme einer Niet-, Schraub- oder Klemmverbindung vorgesehen sein. Alternativ oder zusätzlich hierzu kann eine Klebeschicht, beispielsweise eine doppelseitiges Klebeband, auf der den zu verbindenden Bauteilen zugewandten Seite des Käfigs vorgesehen sein. Wenn der Käfig wenigstens einen Dom oder einen Vorsprung zum Eingriff in eine Öffnung eines der Bauteile aufweist, kann der Käfig unabhängig von der Art der Verbindung mit dem Bauteil ein Drehmoment aufnehmen, das bei der Schraubverbindung von Haltenockenschraube und Verschlussbolzen auftritt. So ist es beispielsweise möglich, statt der sonst üblichen zwei Metallniete zur Anbindung des Käfigs an ein Bauteil nur noch einen Metallniet vorzusehen. Auch bei einer Klebeverbindung des Käfigs mit dem Bauteil wird eine solche Ausgestaltung zur Drehmomentaufnahme bevorzugt. Gleiches gilt auch für die Verwendung eines Kunststoffniets, der mit einer Presspassung oder mittels einer Rastverbindung in den Käfig eingebracht wird.

Ein solcher Kunststoffniet weist vorzugsweise einen Kopf zur Verbindung mit einem der Bauteile und einen Stiftbereich auf, der in einer Öffnung des Käfigs mittels einer Rast- oder Klemmverbindung befestigbar ist. In dem plattenförmigen Bauteil können dabei die üblicherweise auch für einen Metallniet vorgesehenen Befestigungslöcher unverändert beibehalten und für den Kunststoffniet genutzt werden. Ein Kunststoffniet bietet den Vorteil einer weiteren Gewichtseinsparung gegenüber einem Metallniet. Zudem wird der Fügeprozess erheblich vereinfacht, da der Kunststoffniet lediglich eingesteckt werden muss, ohne dass ein Umbördeln erforderlich ist. Zudem ist ein Kunststoffniet demontierbar und bei ausreichender Länge des Stifts auch dickentolerant, so dass etwaige Schwankungen in der Dicke der zu verbindenden Platten nicht relevant sind. Letztgenannter Vorteil trifft auch für die Verwendung der Dome zu, die in die entsprechenden Öffnungen der Platte eingesteckt werden.

Zur Befestigung des Gehäuses des Haltenockens in dem Käfig weist das Gehäuse auf der den zu verbindenden Bauteilen zugewandten Seite wenigstens einen Flansch oder einen z.B. kragenartigen Vorsprung auf. Der Käfig weist auf der den zu verbindenden Bauteilen zugewandten Seite eine Öffnung zur Aufnahme des Gehäuses und auf der den zu verbindenden Bauteilen abgewandten Seite wenigstens einen Bodenabschnitt oder Vorsprung zum Abstützen des Flansches oder Vorsprungs des Gehäuses auf. Auf diese Weise ist es möglich, das Gehäuse von der den zu verbindenden Bauteilen zugewandten Seite her in den Käfig einzusetzen.

Um ein Verlieren des Gehäuses vor dem Verbinden des Haltenockens mit den Bauteilen zu vermeiden, ist dem Käfig vorzugsweise ein Deckel zugeordnet, der auf der den zu verbindenden Bauteilen zugewandten Seite angeordnet ist. Der Deckel kann ein separates Bauteil sein oder einstückig mit dem Käfig beispielsweise über ein Filmscharnier verbunden ausgebildet sein. Vorzugsweise stützt sich der Deckel in seinem montierten Zustand an einem Absatz des Käfigs ab. Für die erforderliche Kraftübertragung oder aus Brandschutzanforderungen kann der Deckel aus Metall bestehen. Der Deckel kann beispielsweise mit einer Presspassung in den Käfig eingesetzt und gegen den Absatz als Anlagefläche positioniert werden. Die Öffnung zur Aufnahme des Gehäuses ist üblicherweise größer als der Durchmesser des meist zylindrischen Gehäuses, um die radiale Beweglichkeit zum Toleranzausgleich zu gewährleisten.

Nach einer alternativen Ausführungsform der Erfindung weist das Gehäuse auf der den zu verbindenden Bauteilen zugewandten Seite einen Flansch oder einen beispielsweise kragenartigen Vorsprung auf, wobei der Käfig eine Grundplatte mit einer Öffnung zur Durchführung des Verschlussbolzens und/oder der Haltenockenschraube aufweist, und wobei auf der den zu verbindenden Bauteilen aufgewandten Seite der Grundplatte wenigstens eine Befestigungsschiene oder eine Nut zur Aufnahme des Flansches oder kragenartigen Vorsprungs des Gehäuses vorgesehen ist. Mit anderen Worten lässt sich das Gehäuse des Haltenockens seitlich in die Schienen oder Nuten des Käfigs einführen, so dass die Montagerichtung im Wesentlichen parallel zu der Ebene der zu verbindenden Bauteile liegt. In Weiterbildung dieses Erfindungsgedankens ist es vorgesehen, dass der Käfig an der Grundplatte einen Rastvorsprung zur Befestigung des Gehäuses aufweist. Auf diese Weise lässt sich das Gehäuse verliersicher in dem Käfig befestigen, ohne dass eine Relativbewegung zwischen dem Gehäuse und dem Käfig vollständig verhindert wird.

Nach einem weiteren Ausführungsbeispiel der vorliegenden Erfindung sind auf der den zu verbindenden Bauteilen abgewandten Seite der Grundplatte zwei einander gegenüberliegende Befestigungsschienen oder Nuten zur Aufnahme des Flansches oder des beispielsweise kragenartigen Vorsprungs des Gehäuses vorgesehen, wobei der Abstand der Schienen oder Nuten so auf die Abmessungen des Flansches oder Vorsprungs des Gehäuses abgestimmt sind, dass der Flansch oder Vorsprung in die Befestigungsschienen oder Nuten einschwenkbar und/oder einrastbar ist. Die Befestigung des Gehäuses erfolgt somit von der den zu verbindenden Bauteilen abgewandten Seite des Käfigs her, wobei das Gehäuse zunächst mit dem Flansch oder Vorsprung in eine der Schienen oder Nuten eingesetzt und dann in die andere Schiene oder Nut eingeschwenkt oder eingerastet wird. Bei dieser Ausführungsform kann das Gehäuse auch ohne Demontage und ohne eine Beschädigung des Käfigs im Bedarfsfall ausgetauscht werden, was bei den bisher bekannten metallischen Varianten nicht zerstörungsfrei möglich ist.

In dem Käfig bzw. in dessen Grundplatte oder Deckel können zusätzlich zu den ggf. vorgesehenen Öffnungen, die zur Befestigung des Käfigs an einem Bauteil bzw. zusätzlich zu der Öffnung zur Durchführung der Haltenockenschraube und/oder des Verschlussbolzens weitere Aussparungen vorgesehen sein, die eine zusätzliche Gewichtsreduzierung bewirken.

Um die Haltenockenschraube und den Verschlussbolzen verliersicher miteinander zu verbinden, kann der Haltenockenschraube eine Verdrehsicherung mit einem Federelement zugeordnet sein. Der Aufbau dieser Verdrehsicherung kann beispielsweise ähnlich wie in der DE 103 19 930 B4 beschrieben erfolgen.

Die Erfindung wird nachfolgend anhand von Ausführungsbeispielen und unter Bezugnahme auf die Zeichnungen näher erläutert.

Es zeigen schematisch:
- Fig. 1: in Perspektivansicht die Komponenten eines Haltenockens nach einer ersten Ausführungsform der Erfindung vor der Montage,
- Fig. 2: den Haltenocken nach Fig. 1 im teilweise montierten Zustand,
- Fig. 3: den Haltenocken nach Fig. 1 im montierten Zustand,
- Fig. 4: den Haltenocken nach Fig. 1 im montierten Zustand,
- Fig. 5: in Schnittansicht den Haltenocken 1 nach Fig. 1 im montierten Zustand,
- Fig. 6: das Detail A aus Fig. 5,
- Fig. 7: in Schnittansicht den an einem Bauteil befestigten Haltenocken nach Fig. 1 gemäß einer ersten Befestigungsvariante,
- Fig. 8: in Schnittansicht den an einem Bauteil befestigten Haltenocken nach Fig. 1 gemäß einer zweiten Befestigungsvariante,
- Fig. 9: in Schnittansicht den an einem Bauteil befestigten Haltenocken nach Fig. 1 gemäß einer dritten Befestigungsvariante,
- Fig. 10: in Schnittansicht den an einem Bauteil befestigten Haltenocken nach Fig. 1 gemäß einer vierten Befestigungsvariante,
- Fig. 11: in Perspektivansicht einen erfindungsgemäßen Haltenocken nach einer zweiten Ausführungsform der Erfindung vor der Montage,
- Fig. 12: den Haltenocken nach Fig. 11 im montierten Zustand,
- Fig. 13: in Perspektivansicht einen Haltenocken nach einer dritten Ausführungsform der Erfindung vor der Montage,
- Fig. 14: den Haltenocken nach Fig. 13 im montierten Zustand,
- Fig. 15: in Perspektivansicht einen Haltenocken nach einer vierten Ausführungsform der Erfindung vor der Montage,
- Fig. 16: den Haltenocken nach Fig. 15 im montierten Zustand, und
- Fig. 17: den Haltenocken nach Fig. 15 im montierten Zustand.

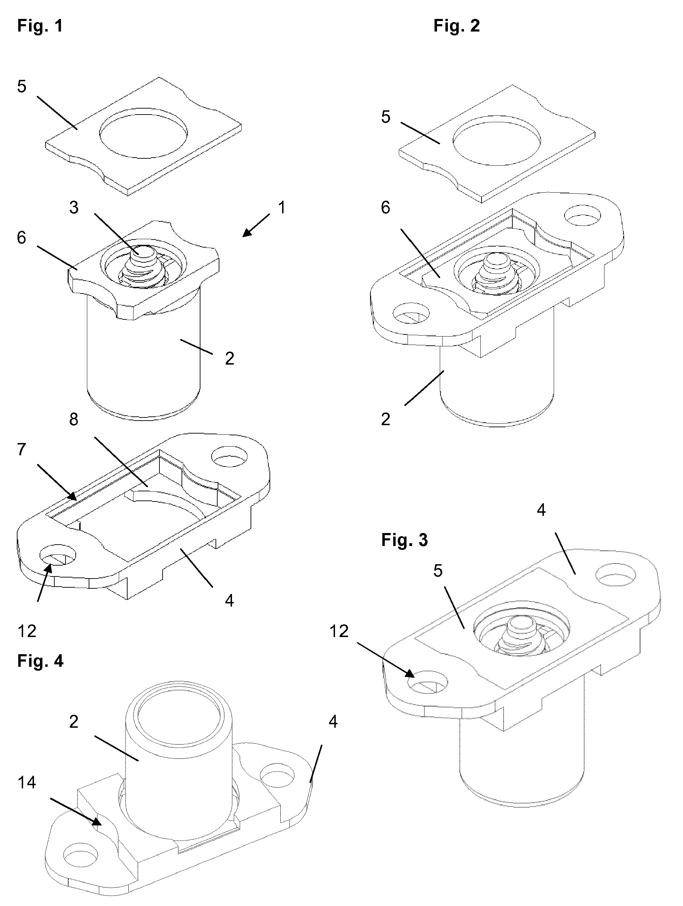

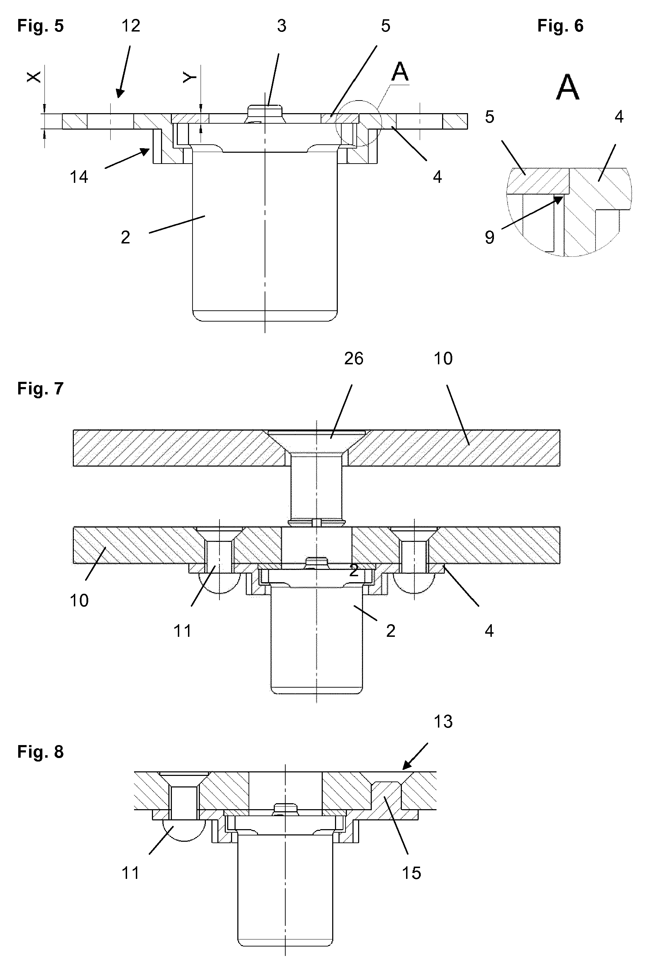

In Fig. 1 ist ein Haltenocken 1 dargestellt, der ein Gehäuse 2, eine darin aufgenommene Haltenockenschraube 3, einen Käfig 4 und einen Deckel 5 aufweist. Zur Verbindung zweier z.B. plattenförmiger Bauteile kann der Haltenocken 1 zusätzlich einen Verschlussbolzen aufweisen, der wie in der DE 103 19 903 B4 beschrieben ausgebildet sein kann. Die Haltenockenschraube 3 ist dabei drehfest in dem topfartigen Gehäuse 2 aufgenommen und kann mit einem Verschlussbolzen, der zumindest hohl mit einem Innengewinde ausgestaltet ist, verbunden werden. Hierzu weist die Haltenockenschraube 3 ein Außengewinde auf. Fig. 7 zeigt zwei plattenförmige Bauteile 10, die über einen Haltenocken 1 mit einer Haltenockenschraube 3 und einem Verschlussbolzen 26 verbindbar sind.

Auf der in Fig. 1 oberen Seite des Gehäuses 2 ist ein Flansch 6 bzw. ein Kragen vorgesehen, mit welchem das Gehäuse 2 in dem Käfig 4 befestigt werden kann. Hierzu weist der Käfig auf seiner im Einbauzustand den zu verbindenden Bauteilen zugewandten Seite (obere Seite in Fig. 1) einen Öffnung 7 auf, in welche das Gehäuse 2 mit dem Flansch 6 eingesetzt werden kann. Auf der der Öffnung 7 gegenüberliegenden Seite ist der Käfig 4 mit zwei Bodenabschnitten 8 versehen, an denen sich der Flansch 6 des Gehäuses 2 abstützt. Wie auch aus der Darstellung der Fig. 2 ersichtlich ist, ist die durch die Öffnung 7 gebildete Aufnahme in der dargestellten Ausführungsform geringfügig größer als der Flansch 6, so dass das Gehäuse 2 mit Spiel in dem Käfig 4 aufgenommen ist. Nach dem Einsetzen des Gehäuses 2 in dem Käfig 4 kann der Deckel 5 mit einer Presspassung in den Käfig eingesetzt werden, wobei der Deckel beispielsweise bündig mit dem Käfig 4 abschließen kann. Allerdings ist die in Fig. 5 angedeutete Dicke Y des Deckels 5 unabhängig von der Dicke X des Montagebereichs für den Käfig 4. In der vergrößerten Detailansicht der Fig. 6 ist zu erkennen, wie sich der Deckel 5 an einem Absatz 9 des Käfigs 4 abstützt. Das Gehäuse 2 liegt dabei mit seinem Flansch 6 unmittelbar an dem Deckel 5 an, so dass der Käfig 4 lediglich dazu dient, das Gehäuse 2 an einem Bauteil verliersicher zu halten, ohne jedoch bei der Verbindung zweier Bauteile im Kraftfluss des Haltenockens 1 zu liegen.

In den Fig. 7 bis 10 sind unterschiedliche Varianten zur Befestigung des Käfigs 4 an einem plattenförmigen Bauteil 10 dargestellt. Fig. 7 zeigt dabei die herkömmliche Befestigung des Käfigs 4 mittels zweier Metallniete 11, die Öffnungen 12 des Käfigs 4 sowie entsprechende Öffnungen 13 des plattenförmigen Bauteils 10 durchsetzen. Zusätzlich sind in Fig. 7 auch eine zweite (obere) Platte 10 und ein Verschlussbolzen 26 dargestellt. Wie auch in Fig. 4 gezeigt, kann hierzu eine Aussparung 14 bzw. ein Radius an dem Käfig 4 vorgesehen sein, der zur Aufnahme des Nietkopfes dient.

Bei der Variante nach Fig. 8 ist nur noch ein Metallniet 11 zur Befestigung des Haltenockens 1 an dem Bauteil 10 vorgesehen. Dies bringt eine signifikante Einsparung an Montagezeit bei der Befestigung des Haltenockens an dem Bauteil mit sich. Um dennoch eine ausreichende Drehmomentabstützung des Käfigs 4 gegenüber dem Bauteil 10 zu erreichen, ist statt einer der Öffnungen 12 an dem Käfig 4 ein Dom 15 ausgebildet, d.h. ein Vorsprung, der in eine der Öffnungen 13 in dem Bauteil 10 eingreift.

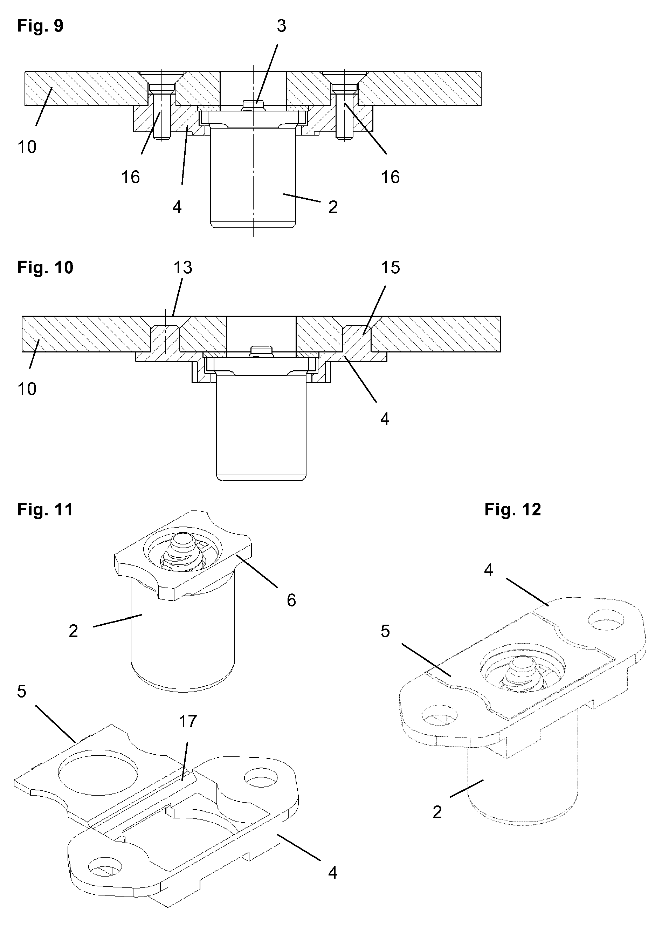

In der Ausführungsform nach Fig. 9 ist der Käfig 4 wiederum mit zwei Öffnungen 12 versehen, in die jeweils ein Kunststoffniet 16 eingebracht werden kann. Der Kunststoffniet wird dabei mittels einer Rast- oder Presspassung in den Öffnungen 12 des Käfigs befestigt. Zur Drehmomentabstützung weist auch der in Fig. 9 gezeigte Käfig 4 Dome 15 auf, die jedoch von den Öffnungen 12 durchsetzt sind. Wenn die Länge des jeweiligen Kunststoffniets 16 wie in Fig. 9 gezeigt größer als die Dicke des Käfigs 4 gewählt ist, kann durch die Überlänge ein größerer Toleranzbereich bezüglich der Dicke des Bauteils 10 ausgeglichen werden.

In der in Fig. 10 gezeigten Ausführungsform ist der Käfig 4 lediglich mit der zentralen Öffnung 7 versehen, wobei statt seitlicher Öffnungen 12 zwei Dome 15 vorgesehen sind, die in die Öffnungen 13 des Bauteils 10 eingesteckt sind. Die Verbindung des Käfigs 4 mit dem Bauteil 10 erfolgt dann über eine Verklebung, beispielsweise mittels eines beidseitigen Klebebandes, so dass die Dome 15 lediglich zur Drehmomentabstützung dienen. Alternativ hierzu ist es auch möglich, dass die Dome mit einer Presspassung in die Öffnungen 13 des Bauteils 10 eingebracht werden, um den Käfig 4 an dem Bauteil 10 zu verklemmen. Auch die Dome 15 können, wenn sie in die Öffnungen 13 eingesteckt werden, etwaige Dickentoleranzen des Bauteils 10 durch ihre Länge ausgleichen.

Die Fig. 11 und 12 zeigen eine Abwandlung zu der in den Fig. 1 bis 7 gezeigten ersten Ausführungsform, wobei der Deckel 5 nicht als ein zu dem Käfig 4 separates Bauteil ausgebildet ist, sondern mittels eines Filmscharniers 17 an dem Käfig befestigt ist. Die Montage des Gehäuses 2 in dem Käfig 4 erfolgt dann ähnlich wie oben hinsichtlich der ersten Ausführungsform erläutert, indem der Deckel 5 nach dem Einsetzen des Gehäuses 2 mit einer Presspassung in dem Käfig 4 befestigt wird.

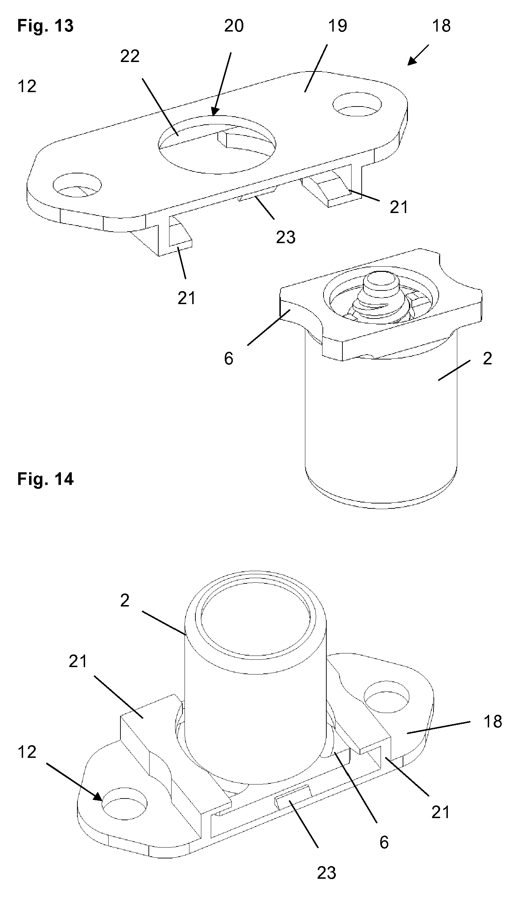

Die Ausführungsformen und Varianten nach den Fig. 1 bis 12 sind jeweils so ausgestaltet, dass das Gehäuse 2 in den Figuren von oben, d.h. von der Seite des Bauteils 10 her in den Käfig eingesetzt wird. Alternativ hierzu ist es auch möglich, das Gehäuse 2 seitlich, d.h. im Wesentlichen parallel zu der durch das Bauteil 10 vorgegebenen Ebene in den Käfig einzusetzen. Dies ist in dem Ausführungsbeispiel der Fig. 13 und 14 dargestellt.

Das Gehäuse 2 mit der Haltenockenschraube 3 und dem Flansch 6 ist dabei wie zuvor beschrieben ausgebildet. Der Käfig 18 weist jedoch eine Grundplatte 19 auf, in welcher eine zentrale Öffnung 20 zur Durchführung der Haltenockenschraube 3 und/oder des Verschlussbolzens vorgesehen ist. Weiter sind in der dargestellten Ausführungsform zwei Öffnungen 12 ähnlich wie bei der Ausführungsform nach Fig. 1 vorgesehen. In Abwandlung hierzu kann der Käfig bezüglich der Befestigung an dem Bauteil 10 auch beispielsweise wie in den Fig. 8 bis 10 dargestellt ausgebildet sein. Auf der den zu befestigenden Bauteilen abgewandten, in Fig. 13 unteren Seite ist der Käfig 18 mit zwei Befestigungsschienen 21 versehen. Diese sind auf der in Fig. 13 vorderen Seite offen und mit Einführschrägen versehen, während sie auf der gegenüberliegenden Seite durch einen Steg 22 verschlossen sind. Auf diese Weise ist es möglich, das Gehäuse 2 mit seinem Flansch 6 in die Befestigungsschienen 21 einzuschieben. Zur Arretierung des Gehäuses 2 innerhalb des Käfigs 18 ist in der dargestellten Ausführungsform ein Rastvorsprung 23 vorgesehen. Der durch die Schienen 21, den Steg 22 und den Rastvorsprung 23 definierte Bereich zur Aufnahme des Flansches 6 des Gehäuses 2 ist dabei wiederum größer als die Abmessungen des Flansches gewählt, so dass eine Relativbewegung des Gehäuses zu dem Käfig 18 möglich ist.

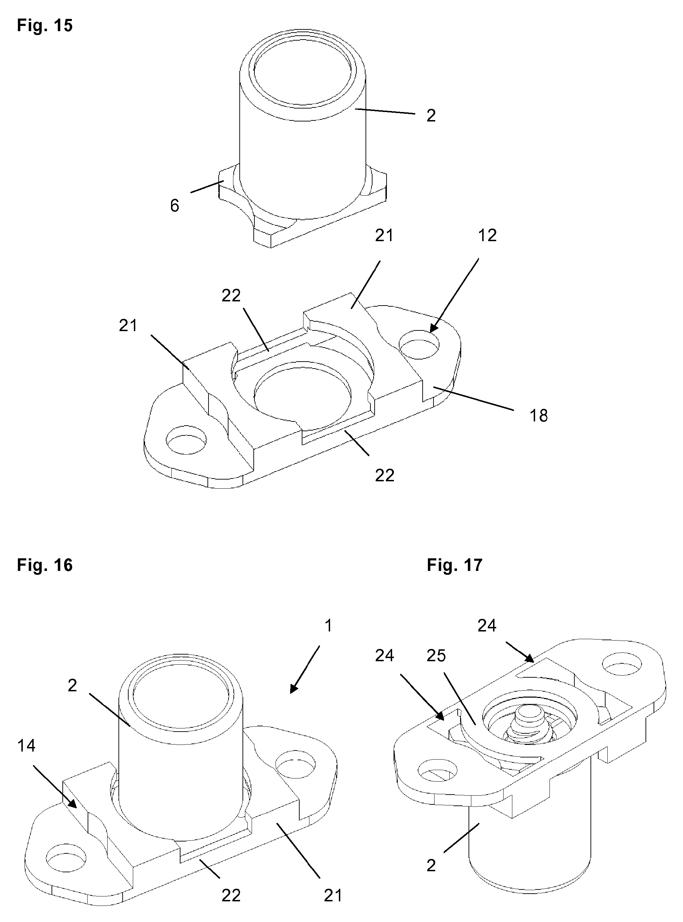

Eine Abwandlung der Ausführungsform nach den Fig. 13 und 14 ist in den Fig. 15 bis 17 dargestellt. Statt der einseitig offenen Gestaltung der Befestigungsschienen 21 sind diese wie in Fig. 15 gezeigt beidseits durch Stege 22 geschlossen. Der Abstand und die Kontur der Befestigungsschienen 21 sind dabei so gewählt, dass der Flansch 6 des Gehäuses 2 bei einer Schrägstellung des Gehäuses 2 zunächst in eine der beiden Schienen 21 eingesetzt werden kann. Durch ein Verschwenken des Gehäuses 2 mit dem Flansch 6 in die in Fig. 16 gezeigte Stellung rastet der Flansch 6 in die gegenüberliegende zweite Schiene ein, so dass das Gehäuse 2 verliersicher in dem Käfig 18 gehalten ist. Die Montage des Gehäuses 2 in dem Käfig 18 erfolgt somit im Wesentlichen von der Unterseite, d.h. von der den zu befestigenden Bauteilen 10 abgewandten Seite her.

Wie aus der Darstellung der Fig. 17 ersichtlich ist, können in dem Käfig 18 zusätzliche Aussparungen 24 vorgesehen sein, um eine weitere Gewichtseinsparung zu erzielen. Ein ringförmiger Bereich 25 ist in der Ausführungsform nach Fig. 17 zwischen den beiden Aussparungen 24 und der zentralen Öffnung 20 so vorgesehen, dass das Gehäuse 2 verliersicher gehalten wird. Darüber hinaus stützt sich an dem ringförmigen Bereich 25 der Flansch 6 des Gehäuses 2 so ab, dass nach der Verbindung der Haltenockenschraube mit einem Verschlussbolzen das Gehäuse 2 über den ringförmigen Bereich 25 an das Bauteil 10 gepresst wird.

### Bezugszeichenliste:

- 1: Haltenocken
- 2: Gehäuse
- 3: Haltenockenschraube
- 4: Käfig
- 5: Decke
- 6: Flansch
- 7: Öffnung
- 8: Bodenabschnitt
- 9: Absatz
- 10: Bauteil
- 11: Niet
- 12: Öffnung
- 13: Öffnung
- 14: Ausnehmung
- 15: Dom
- 16: Kunststoffniet
- 17: Filmscharnier
- 18: Käfig
- 19: Grundplatte
- 20: Öffnung
- 21: Befestigungsschiene
- 22: Steg
- 23: Rastvorsprung
- 24: Aussparung
- 25: ringförmiger Bereich
- 26: Verschlussbolzen

## Patentansprüche

1. Haltenocken, insbesondere für einen Schnellverschluss zum Verbinden von z.B. plattenförmigen Bauteilen (10), mit einem Käfig (4, 18), der starr mit einem der Bauteile (10) verbindbar ist, und mit einem an dem Käfig (4, 18) gelagerten Gehäuse (2), in dem eine Haltenockenschraube (3) drehfest vorgesehen ist, auf die ein mit einem anderen Bauteil (10) verbindbarer Verschlussbolzen (26) mit einem Innengewinde aufschraubbar ist, wobei das Gehäuse (2) auf der den zu verbindenden Bauteilen (10) zugewandten Seite einen Flansch (6) oder einen Vorsprung aufweist, wobei das Gehäuse (2) relativ zu dem Käfig (4, 18) in einer zu der Ebene der Auflagefläche der Bauteile (10) parallelen Richtung verschiebbar ist, **dadurch gekennzeichnet,**
**dass** das Gehäuse (2) aus Metall und der Käfig (4, 18) aus Kunststoff besteht, und dass der Käfig (4, 18) auf der den zu verbindenden Bauteilen (10) zugewandten Seite eine Öffnung (7), in welche das Gehäuse (2) mit dem Flansch (6) eingesetzt werden kann und auf der den zu verbindenden Bauteilen (10) abgewandten Seite wenigstens einen Bodenabschnitt (8) zum Abstützen des Flansches (6) oder Vorsprungs des Gehäuses (2) aufweist.

2. Haltenocken nach Anspruch 1, **dadurch gekennzeichnet, dass** der Käfig (4, 18) Öffnungen (12) zur Aufnahme einer Niet-, Schraub-, Rast- oder Klemmverbindung aufweist.

3. Haltenocken nach Anspruch 2, **dadurch gekennzeichnet, dass** zusätzlich wenigstens ein Kunststoffniet (16) vorgesehen ist, der einen Kopf zur Verbindung mit einem der Bauteile (10) und einen Stiftbereich aufweist, der in einer Öffnung (12) des Käfigs (4) mittels einer Rast- oder Klemmverbindung befestigbar ist.

4. Haltenocken nach einem der vorhergehenden Ansprüche, **dadurch gekennzeichnet, dass** zusätzlich eine Klebeschicht, insbesondere ein doppelseitiges Klebeband, auf der den zu verbindenden Bauteilen (10) zugewandten Seite des Käfigs (4, 18) vorgesehen ist.

5. Haltenocken nach einem der vorhergehenden Ansprüche, **dadurch gekennzeichnet, dass** der Käfig (4, 18) wenigstens einen Dom (15) oder Vorsprung zum Eingriff in eine Öffnung (13) eines der Bauteile (10) aufweist.

6. Haltenocken nach einem der vorhergehenden Ansprüche , **dadurch gekennzeichnet, dass** dem Käfig (4, 18) ein Deckel (5) zugeordnet ist, der sich vorzugsweise in seinem montierten Zustand an einem Absatz (9) des Käfigs (4, 18) abstützt.

7. Haltenocken nach einem der vorhergehenden Ansprüche, **dadurch gekennzeichnet, dass** der Haltenockenschraube (3) eine Verdrehsicherung mit einem Federelement zugeordnet ist.

## Claims

1. A retaining cam, in particular for a quick-release fastener for connecting, e.g., plate-shaped components (10), comprising a cage (4, 18) that can be rigidly connected to one of the components (10) and comprising a housing (2) which is mounted on the cage (4, 18) and in which a retaining cam screw (3) is provided which is rotationally fixed and onto which a locking bolt (26) having an internal thread and connectable to another component (10) can be screwed, wherein the housing (2) has a flange (6) or projection on the side facing the components (10) to be connected, wherein the housing (2) can be displaced relative to the cage (4, 18) in a direction parallel to the plane of the contact surface of the components (10), **characterized in**
**that** the housing (2) is made of metal and the cage (4, 18) is made of plastics, and that the cage (4, 18) has an opening (7) on the side facing the components (10) to be connected, in which opening the housing (2) with the flange (6) can be inserted, and has a bottom section (8) on the side facing away from the components (10) to be connected for supporting the flange (6) or the projection of the housing (2).

2. The retaining cam according to claim 1, **characterized in that** the cage (4, 18) has openings (12) for receiving a rivet connection, screw connection, snap-on connection or clamping connection.

3. The retaining cam according to claim 2, **characterized in that** additionally at least on plastic rivet (16) is provided which has a head for connecting to one of the components (10) and has a pin region which can be connected in an opening (12) of the cage (4) by means of a snap-on or clamping connection.

4. The retaining cam according to any one of the preceding claims, **characterized in that** additionally an adhesive layer, in particular a double-sided adhesive tape, is provided on the side of the cage (4, 18) facing the components (10) to be connected.

5. The retaining cam according to any one of the preceding claims, **characterized in that** the cage (4, 18) has at least one dome (15) or projection for engaging in an opening (13) of one of the components (10).

6. The retaining cam according to any one of the preceding claims, **characterized in that** the cage (4, 18) is assigned a cover (5) which, preferably in its mounted state, is supported on a shoulder (9) of the cage (4, 18).

7. The retaining cam according to any one of the preceding claims, **characterized in that** the retaining cam screw (3) is assigned an anti-rotation device with a spring element.

## Revendications

1. Ergot de retenue, en particulier pour une fermeture rapide destinée à connecter par exemple des pièces en forme de plaques (10), à une cage (4, 18) qui est connectable fixement à l'une des pièces (10), et comportant un boîtier (2) logé sur la cage (4, 18) dans lequel il est prévu une vis d'ergot de retenue (3) fixe en rotation sur laquelle une cheville de fermeture (26) pouvant être connectée à une autre pièce (10) peut être vissée grâce à un filetage intérieur, le boîtier (2) présentant sur sa face tournée vers les pièces à connecter (10) une bride (6) ou une saillie, le boîtier (2) étant déplaçable par rapport à la cage (4, 18) dans un sens parallèle au plan de la surface d'appui des pièces (10), **caractérisé en ce que**
le boîtier (2) est composé de métal et la cage (4, 18) de matière plastique et que la cage (4, 18) présente, sur sa face tournée vers les pièces (10) à connecter, une ouverture (7) dans laquelle le boîtier (2) peut être inséré avec la bride (6) et, sur la face détournée des pièces (10) à connecter, au moins une section de fond (8) pour l'appui de la bride (6) ou de la saillie du boîtier (2).

2. Ergot de retenue selon la revendication 1, **caractérisé en ce que** la cage (4, 18) présente des ouvertures (12) destinées à recevoir un raccord riveté, vissé, enclenché ou serré.

3. Ergot de retenue selon la revendication 2, **caractérisé en ce qu'**il est prévu en complément au moins un rivet en matière plastique (16) qui présente une tête destinée à être connectée à une des pièces (10) et une partie tige qui peut être fixée dans une ouverture (12) de la cage (4) au moyen d'un raccord enclenché ou serré.

4. Ergot de retenue selon une des revendications précédentes, **caractérisé en ce qu'**il est prévu en outre une couche collante, en particulier un ruban adhésif à double face, sur la face tournée vers les pièces à connecter (10) de la cage (4, 18).

5. Ergot de retenue selon une des revendications précédentes, **caractérisé en ce que** la cage (4, 18) présente au moins un dôme (15) ou une saillie s'engrenant dans une ouverture (13) d'une des pièces (10).

6. Ergot de retenue selon une des revendications précédentes, **caractérisé en ce qu'**est associé à la cage (4, 18) un couvercle (5) qui s'appuie de préférence en état monté sur un talon (9) de la cage (4, 18).

7. Ergot de retenue selon une des revendications précédentes, **caractérisé en ce qu'**est associé à la vis d'ergot de retenue (3) un système anti-rotation pourvu d'un élément à ressort.
